# EUROPEAN PATENT SPECIFICATION

(11) **EP 2 368 774 B1**
(45) Date of publication and mention of the grant of the patent: **08.01.2014**
(21) Application number: 09828964.8
(22) Date of filing: 04.11.2009
(51) Int. Cl.: B60R 25/02

(54) **STEERING LOCK DEVICE**
LENKSCHLOSSVORRICHTUNG
DISPOSITIF DE VERROUILLAGE SUR LA DIRECTION

(30) Priority: 27.11.2008 JP 2008302346
(43) Date of publication of application: 28.09.2011
(73) Proprietor: Alpha Corporation, Yokohama-shi, Kanagawa 236-0004 (JP)
(72) Inventor: KURATA, Takebumi, Yokohama-shi Kanagawa 236-0004 (JP)
(74) Representative: Grünecker, Kinkeldey, Stockmair & Schwanhäusser
(86) International application number: PCT/JP2009/068794
(87) International publication number: WO 2010/061715

(56) References cited:
- GB-A- 1 333 779
- JP-U- 59 000 357

## Description

### TECHNICAL FIELD

The present invention relates to a steering lock device that locks rotation of a steering shaft of an automobile.

### BACKGROUND ART

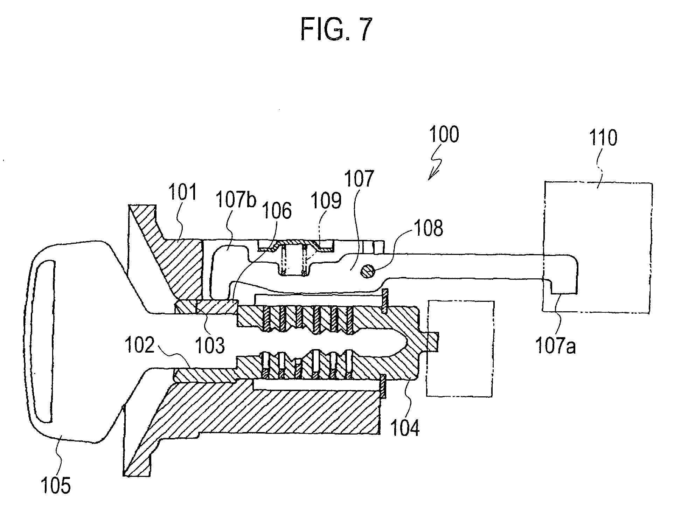

As a conventional steering lock device, a key device disclosed in Japanese Granted Patent Publication No. 2752709 is known. The key device includes a key cylinder 101, a key rotor 104, a slider 106, a lever 107, a pin 108 and a spring 109, as shown in Fig. 7. The key rotor 104 is rotatably provided in the key cylinder 101. An insertion hole 102 and a guide slit 103 are formed on the key rotor 104. The slider 106 is movably provided in the guide slit 103, and moves in the guide slit 103 along with insertion/removal of a key 105. The lever 107 is swingably provided on the key cylinder 101. An end 107a of the lever 107 engages with a steering lock device 110. Another end 107b of the lever 107 on a key side contacts with the slider 106. The pin 108 is provided on a casing (not shown), and supports the lever 107 swingably. The spring 109 is provided in the key cylinder 101, and urges the other end 107b toward an outer circumferential surface of the key rotor 104.

Upon inserting the key 105 into the insertion hole 102 of the key rotor 104, the slider 106 slides outward of the key rotor 104. The other end 107a is pushed by the slider 106, so that the lever 107 swings clockwise in Fig. 7. Next, when the key 105 is turned in its unlock direction, a lock member (not shown) of the steering lock device 100 is unlocked and engages with the end 107a, so that an unlocked state of the steering lock device 100 is kept. At this time, an engagement between the lock member and a steering shaft is released due to a displacement of the lock member from its lock position to its unlock position. As a result, rotation of the steering shaft is made free and it becomes able to drive an automobile.

On the hand, when the key 105 is rotated to its lock direction from the above unlocked state and the key 105 is removed from the insertion hole 102, the slider 106 slides inward of the key rotor 104. The lever 107 is swung counterclockwise in Fig. 7 by the spring 109 along with sliding of the slider 106, so that the steering lock device is locked. At this time, the lock member and the steering shaft are engaged due to a displacement of the lock member from its unlock position to its lock position. As a result, the rotation of the steering shaft is blocked and it becomes unable to drive the automobile.

### SUMMARY OF THE INVENTION

However, in the conventional key device 100, it is required to attach the pin 108 to the lever 107 and its press-fitting process is also required, so that there is a problem of increasing costs.

Therefore, an object of the present invention is to provide a steering lock device that doesn't need a pin as a swing pivot point, can control locked/unlocked states of a lock member via a lever along with insertion/removal of a key, and can brings cost reduction.

JP 59-357 U discloses a steering lock device according to the preamble of claim 1.

According to the invention, one of the pivot-point receive portion and the pivot-point portion is formed as a depressed portion and another thereof is formed as a protruded portion toward the depressed portion, and the protruded portion is supported with urged toward the depressed portion. Since the protruded portion is supported with urged toward the depressed portion, a pin as a swing center is not required, and locking/unlocking the lock member can be controlled via the lever 7 along with insertion/removal of the key. Therefore, assembling workability can be improved, and the number of parts and its costs can be reduced.

The pivot-point receive portion is provided at an open edge of a support hole that is formed on a cylinder case that constitutes an outer shell of the key cylinder, and the pivot-point portion is protruded on the lever and supported by the pivot-point receive portion with inserted into the support hole.

According to this, the pivot-point portion is inserted into the support hole and then supported by the pivot-point receive portion provided at the open edge of the support hole. Therefore, a swing range of the lever can be made small by arranging the lever nearer to a center axis of the key cylinder. As a result, a whole size of the device along the radial direction can be made small.

Here, it is preferable that the pivot-point portion is formed as a curved convex portion whose radius is larger than a moving displacement of the pivot-point portion in the radial direction of the key cylinder, and the pivot-point receive portion is formed as the depressed portion that is larger than the pivot-point portion.

According to this, since the curved swing pivot-point portion is supported with urged toward the pivot-point receive portion when the lever swings, the lever can smoothly swing about the pivot-point portion as its swing center. In addition, since the pivot-point portion of the lever is supported by the pivot-point receive portion, chattering of the lever can be restricted. Further, since the radius of the pivot-point portion is made larger than the moving displacement of the pivot-point portion, a portion of the pivot-point portion still stays within a coverage of the pivot-point receive portion even when the pivot-point portion moves. As a result, the pivot-point portion and the pivot-point receive portion can be smoothly coupled with each other when the pivot-point portion approaches to the pivot-point receive portion.

Further, it is preferable that the pivot-point receive portion is formed as a curved concave portion whose curvature radius is larger than the radius of the pivot-point portion.

According to this, the pivot-point portion can be received reliably by an inner circumferential surface of the pivot-point receive portion. In addition, since the curvature radius of the inner circumferential surface is set larger than the radius of the pivot-point portion, the pivot-point portion can be smoothly separated away from the pivot-point receive portion during transition from a state where the pivot-point portion is supported with urged toward the pivot-point receive portion to a swinging (displacing) state of the lever about its end portion as its swing center. Similarly, the pivot-point portion can be urged-toward and received-by the pivot-point receive portion smoothly, and then supported thereby.

### BRIEF DESCRIPTION OF THE DRAWINGS

**[****Fig. 1****]** is a cross-sectional view showing a locked state of a steering lock device according to an embodiment of the present invention.
**[****Fig. 2****]** is a cross-sectional view showing a key-inserted state of the steering lock device according to the embodiment of the present invention.
**[****Fig. 3****]** is a cross-sectional view showing an unlocked state of the steering lock device according to the embodiment of the present invention.
**[****Fig. 4****]** is a front view of the steering lock device according to the embodiment of the present invention.
**[****Fig. 5****]** is a cross-sectional view taken along a line V-V shown in Fig. 1.
**[****Fig. 6****]** is an enlarged view showing a swing pivot-point portion of a lever in the steering lock device according to the embodiment of the present invention.
**[****Fig. 7****]** is a cross-sectional view showing a conventional key device.

### DESCRIPTION OF EMBODIMENT(S)

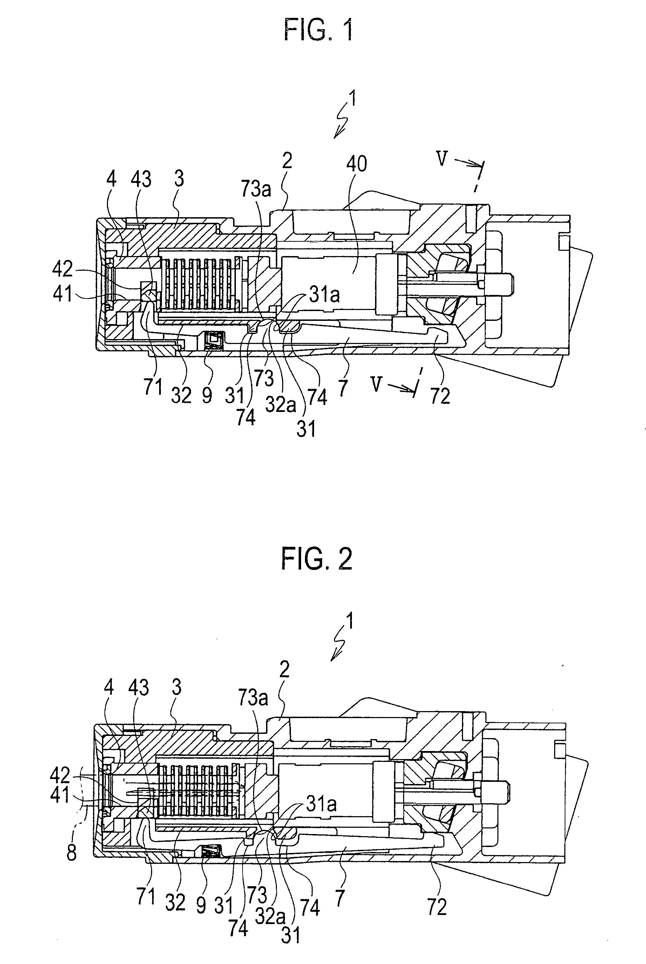

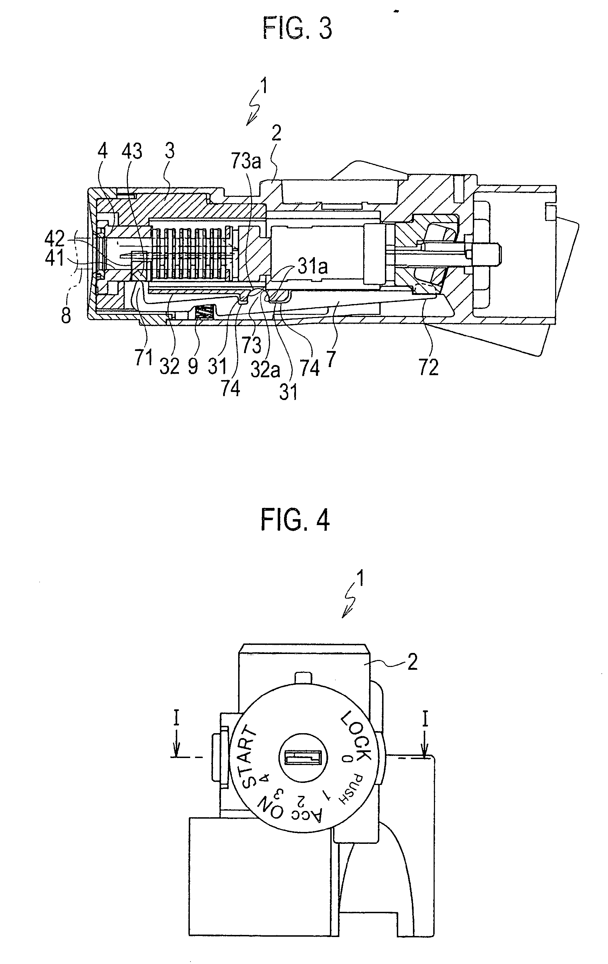

Hereinafter, an embodiment according to the present invention will be explained with reference to Fig. 1 to Fig. 6. Note that Fig. 1 is a cross-sectional view taken along a line I-I shown in Fig. 4.

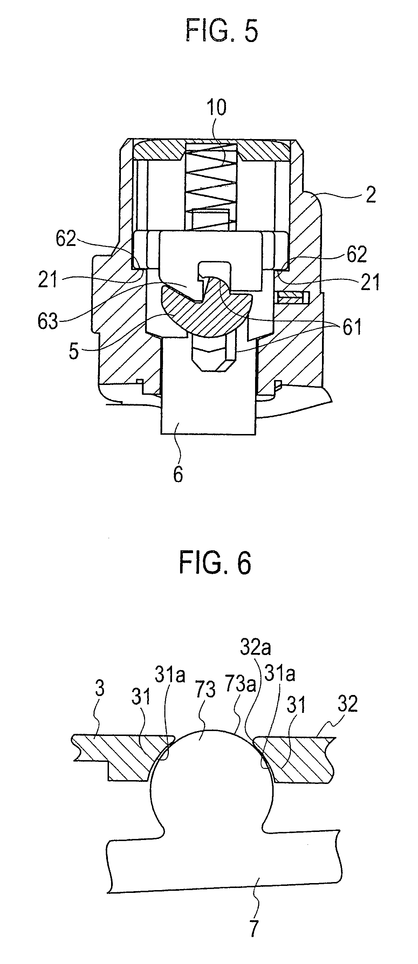

As shown in Fig. 1 to Fig. 3, the steering lock device 1 according to the present embodiment includes a housing 2, a key cylinder 3, a key rotor 4, a rotator 40, a cam member 5 (see Fig. 5), a lock member 6 (see Fig. 5), and a lever 7. The key cylinder 3 is housed in the housing 2. The key rotor 4 is rotatably provided in the key cylinder 3. The rotator 40 is coupled with the key rotor 4 to rotate along with the key rotor 4. As shown in Fig. 5, an interlock hole 61 that interlocks with the cam member 5 is formed on the lock member 6. In addition, an end of the lock member 6 projects from a bottom face of the housing 2 when locked to engage with a steering shaft (not shown), and is retracted in the housing when unlocked. The lever 7 is interposed between the housing 2 and the key cylinder 3, and extended in an axial direction of the key cylinder 3.

The key rotor 4 is provided with an insertion hole 41 into which a key 8 is to be inserted and a slide hole 42 that penetrates in a radial direction of the key rotor 4. A slider 43 is disposes within the slide hole 42. The slider 43 slides in the radial direction within the slide hole 42. When the key 8 is inserted, the key 8 contacts with a sloped surface of the slider 43, and then the slider 43 moves in the radial direction within the slide hole 42.

As shown in Fig .5, the lock member 6 has a rectangular frame shape, and the interlock hole 61 is formed in its frame. A cam follower 63 is protrudedly provided near the interlock hole 61. In addition, lock-side stepped portions 62 are formed along a slide direction on both outer sides of the frame of the lock member 6.

The lock member 6 is slidably disposed within the housing 2 along a radial direction of the key cylinder 3. The lock member 6 is urged toward the steering shaft (downward in Fig. 5) by a restoring force of a lock spring 10 that is disposed between the lock member 6 and the housing 2 with compressed. In addition, when the lock member 6 is projected from the housing 2, the lock-side stepped portions 62 contact with housing-side stepped portions 21 to regulate a projected displacement of the lock member 6. When the cam member 5 that is inserted in the interlock hole 61 is rotated clockwise in Fig . 5, the cam member 5 and the cam follower 63 interlocks with each other to displace the lock member 6 upward in Fig .5.

The lever 7 has a long plate shape and is dispose along the axial direction of the key cylinder 3, i.e. along the key cylinder 3, the rotator 40 and the cam member 5. The lever 7 has one end portion 71, another end portion 72 and a pivot-point portion 73. The one end portion 71 is formed with a hooked shape at an end of the lever 7 and enabled to contact with the slider 43. The other end 72 is formed with a hooked shape at another end of the lever 7 and enabled to contact with the lock member 6. The pivot-point portion 73 is protruded near a center of the lever 7 toward the key rotor 4 and functions as a swing pivot point of the lever 7. The pivot-point portion 73 has a semicircular whose radius is larger than its moving displacement in the radial direction of the key rotor 4. In addition, The one end portion 71 is urged toward the key rotor 4 by a restoring force of a lever spring 9 that is disposed between the lever 7 and the housing with compressed, the lever 7 is supported by after-mentioned pivot-point receive portions 31 in a state where the pivot-point portion 73 is inserted in an after-mentioned support hole 32a.

The key cylinder 3 has the pivot-point receive portions 31 that receive the pivot-point portion 73 of the lever 7. As shown in Fig. 6, the support hole 32a is formed on a cylinder case 32 that constitutes an outer shell of the key cylinder 3. The support hole 32a is a slit along the axial direction of the key cylinder 3, and penetrates from an outer surface to an inner surface of the cylinder case 32. The pivot-point receive portions 31 are provided on both sides along a longitudinal direction at an open edge of the support hole 32a. The pivot-point receive portions 31 are formed as curved surfaces whose curvature radius is slightly larger than a radius of the pivot-point portion 73. Note that, as shown in Fig. 1 to Fig. 3, gullet portions 74 are formed on the lever 7 on both sides of the pivot-point portion 73. Contacts between the lever 7 and the pivot-point receive portions 31 are prevented by the gullet portions 74, so that sufficient swing range of the lever 7 can be ensured.

According to the steering lock device 1 with the above-described configuration, in a locked state of the lock member 6 shown in Fig. 1 and Fig. 5, the pivot-point portion 73 is contacted with the pivot-point receive portions 31 by the lever spring 9 to function as a swing center, the one end portion 71 pushes the slider 43 into an inside of the key rotor 4, and the other end portion 72 is separated away from the lock member 6.

Subsequently, the key 8 is inserted into the key rotor 4 as shown in Fig. 2, so that the slider 43 is pushed outward and the one end 71 is pushed outward from the key rotor 4 via the slider 43. The lever 7 swings counterclockwise in Fig. 2 about the pivot-point portion 73 as its swing center in a state where the pivot-point portion 73 and the pivot-point receive portions 31 contact with each other, so that the other end portion 72 contacts with the lock member 6. After the other end portion 72 contacts with the lock member 6, the lever 7 swings about the other end portion 72 as its swing center, so that the pivot-point portion 73 is separated away from the pivot-point receive portions 31.

Subsequently, the key 8 is rotated to an unlock direction (clockwise in Fig. 4) as shown in Fig. 3, so that the cam member 5 is rotated in the unlock direction along with the key rotor 4 and the lock member 6 is retracted in the housing 2 due to interlocking between the cam member 5 and the interlock hole 61. When the lock member 6 is retracted in the housing 2, gaps are formed between the housing-side stepped portions 21 and the lock-side stepped portions 62. At this time, the lever 7 swings about the one end portion 71 as its swing center due to an urging force of the lever spring 9. As a result, the pivot-point portion 73 contacts with the pivot-point receive portions 31, and the other end portion 72 is inserted into the gap between housing-side stepped portion 21 and the lock-side stepped portion 62. Since the other end portion 72 is inserted into the gap between housing-side stepped portion 21 and the lock-side stepped portion 62, the other end portion 72 and the lock-side stepped portion 62 are engaged with each other to keep an unlocked state of the lock member 6.

And, the key 8 is removed after rotated in an unlock direction (counterclockwise in Fig. 4) in the unlocked state, so that the one end portion 71 is released from being pressed by the slider 43. As a result, the lever 7 swings about the pivot-point portion 73 as its swing center due to the urging force of the lever spring 9, and the engagement between the other end portion 72 and the lock member 6 is released. In addition, since the cam member 5 is rotated in the lock direction along with the key rotor 4, the lock member 6 is set in the locked state due to an urging force of the lock spring 10. As a result, the lock member 6 engages with the steering shaft to prevent the steering shaft from rotating.

According to the present embodiment, a pin as a swing pivot point is not required, and locking/unlocking the lock member 6 can be controlled via the lever 7 along with insertion/removal of the key 8. Therefore, assembling workability can be improved, and the number of parts and its costs can be reduced.

In the above embodiment, since a curved outer circumference surface 73a of the pivot-point portion 73 contacts with the pivot-point receive portions 31 when the lever 7 swings, the lever 7 can smoothly swing about the pivot-point portion 73 as its swing center. In addition, since the pivot-point portion 73 of the lever 7 is supported by the pivot-point receive portions 31, chattering of the lever 7 can be restricted. Further, since the radius of the outer circumference surface 73a of the pivot-point portion 73 is made larger than the moving displacement of the pivot-point portion 73 in the radial direction of the key cylinder 3 (the key rotor 4), a portion of the pivot-point portion 73 still stays within a coverage of the pivot-point receive portions 31 even when the pivot-point portion 73 moves. As a result, the pivot-point portion 73 and the pivot-point receive portions 31 can be smoothly coupled with each other when the pivot-point portion 73 approaches to the pivot-point receive portions 31.

In the above embodiment, the pivot-point portion 73 of the lever 7 can be received reliably by inner circumferential surfaces 31a that are formed to be curved. In addition, since the curvature radius of the inner circumferential surfaces 31a is set larger than the radius of the outer circumference surface 73a, the pivot-point portion 73 can be smoothly separated away from the pivot-point receive portions 31 during transition from an engagement state between the pivot-point portion 73 and the pivot-point receive portions 31 to a swinging (displacing) state of the lever 7 about the other end portion 72 as its swing center. Similarly, the pivot-point portion 73 can be smoothly received by the pivot-point receive portions 31.

In the above embodiment, the pivot-point portion 73 is inserted into the support hole 32a and then supported by the pivot-point receive portions 31 provided at the open edge of the support hole 32a. Therefore, the swing range of the lever 7 can be made small by arranging the lever 7 nearer to a center axis of the key cylinder 3. As a result, a whole size of the device along the radial direction can be made small.

## Claims

1. A steering lock device (1) comprising:
a cylindrical housing (2);
a key cylinder(3) that is housed in the housing (2) and has a pivot-point receive portion (31);
a key (8) that can be inserted into the key cylinder (3) and locks/unlocks the key cylinder (3) by a rotation thereof after an insertion thereof;
a cam member (5) that rotates along with a rotation of the key cylinder (3);
a lock member (6) that is slidably provided in the housing (2) and displaced along with a rotation of the cam member (5); and
a lever(7) that is extended along an axial direction of the key cylinder (3) and can be displaced in a radial direction of the key cylinder(3), wherein
the lever(7) includes a pivot-point portion (73) that is received by the pivot-point receive portion (31), and can swing about the pivot-point portion (73),
the lock member (6) is displaced to an unlocked position thereof due to the rotation of the key (8), and the lever(7) and the lock member (6) positioned at the unlocked position are engaged due to swinging of the lever (7) along with the insertion of the key (8) into the key cylinder (3) to keep the lock member (6) at the unlock position, and
one of the pivot-point receive portion (31) and the pivot-point portion (73) is formed as a depressed portion (31) and another thereof is formed as a protruded portion (73) toward the depressed portion (31), and the protruded portion (73) is supported with urging toward the depressed portion (31),
**characterized in that**
the pivot-point receive portion (31) is provided at an open edge of a support hole (32a) that is formed on a cylinder case (32) that constitutes an outer shell of the key cylinder (3), and
the pivot-point portion (73) is protruded on the lever (7) and supported by the pivot-point receive portion (31) with insertion into the support hole (32a).

2. The steering lock device (1) according to claim 1, wherein
the pivot-point portion (73) is formed as a curved convex portion (73) whose radius is larger than a moving displacement of the pivot-point portion (73) in the radial direction of the key cylinder (3), and
the pivot-point receive portion (31) is formed as the depressed portion (31) that is larger than the pivot-point portion (73).

3. The steering lock device (1) according to claim 2, wherein
the pivot-point receive portion (31) is formed as a curved concave portion (31) whose curvature radius is larger than the radius of the pivot-point portion (73).

## Patentansprüche

1. Lenkschlossvorrichtung (1), die umfasst:
ein zylindrisches Gehäuse (2);
einen Schließzylinder (3), der in dem Gehäuse (2) aufgenommen ist und einen Drehpunkt-Aufnahmeabschnitt (31) aufweist;
einen Schlüssel (8), der in den Schließzylinder (3) eingeführt werden kann und der den Schließzylinder (3) nach Einführen desselben mittels einer Drehung verriegelt/entriegelt;
ein Nockenelement (5), das sich mit einer Drehung des Schließzylinders (3) dreht;
ein Schlosselement (6), das verschiebbar in dem Gehäuse (2) vorhanden ist und bei einer Drehung des Nockenelementes (5) verschoben wird; und
einen Hebel (7), der sich in einer axialen Richtung des Schließzylinders (3) erstreckt und in einer radialen Richtung des Schließzylinders (3) verschoben werden kann, wobei der Hebel (7) einen Drehpunkt-Abschnitt (73) enthält, der von dem Drehpunkt-Aufnahmeabschnitt (31) aufgenommen wird, und er um den Drehpunkt-Abschnitt (73) herum geschwenkt werden kann,
das Verriegelungselement (6) aufgrund der Drehung des Schlüssels (8) an seine entriegelte Position verschoben wird, und der Hebel (7) und das Schlosselement (6), das sich an der entriegelten Position befindet, aufgrund von Schwenken des Hebels (7) beim Einführen des Schlüssels (8) in den Schließzylinder (3) in Eingriff gebracht werden und so das Schlosselement (6) in der entriegelten Position halten, und
der Drehpunkt-Aufnahmeabschnitt (31) oder der Drehpunkt-Abschnitt (73) als ein vertiefter Abschnitt (31) ausgebildet ist, der andere Abschnitt als ein zu dem vertieften Abschnitt (31) hin vorstehender Abschnitt (73) ausgebildet ist und der vorstehende Abschnitt (73) mit Druck in Richtung des vertieften Abschnitts (31) gelagert wird,
**dadurch gekennzeichnet, dass**
der Drehpunkt-Aufnahmeabschnitt (31) an einem offenen Rand eines Lagerungslochs (32a) vorhanden ist, das an einem Zylindergehäuse (32) ausgebildet ist, das eine äußere Ummantelung des Schließzylinders (3) bildet, und
der Drehpunkt-Abschnitt (73) an dem Hebel (7) vorsteht und bei Einführung in das Lagerungsloch (32a) von dem Drehpunkt-Aufnahmeabschnitt (31) gelagert wird.

2. Lenkschlossvorrichtung (1) nach Anspruch 1, wobei
der Drehpunkt-Abschnitt (73) als ein gekrümmter konvexer Abschnitt (73) ausgebildet ist, dessen Radius größer ist als eine Bewegungsverschiebung des Drehpunkt-Abschnitts (73) in der radialen Richtung des Schließzylinders (3), und
der Drehpunkt-Aufnahmeabschnitt (31) als der vertiefte Abschnitt (31) ausgebildet ist, der größer ist als der Drehpunkt-Abschnitt (73).

3. Lenkschlossvorrichtung (1) nach Anspruch 2, wobei
der Drehpunkt-Aufnahmeabschnitt (31) als ein gekrümmter konkaver Abschnitt (31) ausgebildet ist, dessen Krümmungsradius größer ist als der Radius des Drehpunkt-Abschnitts (73).

## Revendications

1. Dispositif de verrouillage de direction (1) comprenant :
un logement cylindrique (2) ;
un barillet à clé (3) qui est logé dans le logement (2) et comporte une partie de réception de point de pivotement (31) ;
une clé (8) qui peut être insérée dans le barillet à clé (3) et verrouille/déverrouille le barillet à clé (3) par une rotation de celle-ci après une insertion de celle-ci ;
un élément de came (5) qui tourne avec la rotation du barillet à clé (3) ;
un élément de verrouillage (6) disposé de manière coulissante dans le logement (2) et se déplaçant avec la rotation de l'élément de came (5) ; et
un levier (7) s'étendant dans la direction axiale du barillet à clé (3) et pouvant être déplacé dans la direction radiale du barillet à clé (3), dans lequel
le levier (7) comporte une partie de point de pivotement (73) qui est reçue par la partie de réception de point de pivotement (31) et peut osciller autour de la partie de point de pivotement (73),
l'élément de verrouillage (6) est déplacé jusqu'à une position déverrouillée de celui-ci en raison de la rotation de la clé (8), et le levier (7) et l'élément de verrouillage (6) positionné dans la position déverrouillée sont en prise en raison de l'oscillation du levier (7) avec l'insertion de la clé (8) dans le barillet à clé (3) pour maintenir l'élément de verrouillage (6) dans la position déverrouillée, et
une partie parmi la partie de réception de point de pivotement (31) et la partie de point de pivotement (73) est conformée sous forme d'une partie renfoncée (31) et une autre de celles-ci est conformée sous forme d'une partie en saillie (73) vers la partie renfoncée (31), et la partie en saillie (73) est supportée avec une poussée vers la partie renfoncée (31),
**caractérisé en ce que**
la partie de réception de point de pivotement (31) est prévue sur un bord ouvert d'un trou de soutien (32a) qui est formé sur un boîtier cylindrique (32) constituant l'enveloppe externe du barillet à clé (3), et
la partie de point de pivotement (73) est en saillie sur le levier (7) et supportée par la partie de réception de point de pivotement (31) avec l'insertion dans le trou de soutien (32a).

2. Dispositif de verrouillage de direction (1) selon la revendication 1, dans lequel
la partie de point de pivotement (73) est conformée sous forme d'une partie convexe incurvée (73) dont le rayon est plus grand que le déplacement de la partie de point de pivotement (73) dans la direction radiale du barillet à clé (3), et
la partie de réception de point de pivotement (31) est conformée en tant que partie renfoncée (31) qui est plus grande que la partie de point de pivotement (73).

3. Dispositif de verrouillage de direction (1) selon la revendication 2, dans lequel
la partie de réception de point de pivotement (31) est conformée sous forme d'une partie concave incurvée (31) dont le rayon de courbure est plus grand que le rayon de la partie de point de pivotement (73).
